(19) Europäisches Patentamt
European Patent Office
Office européen des brevets

(11) **EP 2 933 614 A1**

(12) **EUROPEAN PATENT APPLICATION**

(43) Date of publication:
**21.10.2015 Bulletin 2015/43**

(51) Int Cl.:
*G01G 19/08* (2006.01)   *G01G 23/00* (2006.01)

(21) Application number: **15163625.5**

(22) Date of filing: **15.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **15.04.2014 SE 1450459**

(71) Applicant: **Scania CV AB**
**151 87 Södertälje (SE)**

(72) Inventors:
• **Öhlund, Erik**
  **153 38 Järna (SE)**
• **Sundén, Fredrik**
  **126 77 Hägersten (SE)**
• **Nilsson, Mattias**
  **151 33 Södertälje (SE)**

(74) Representative: **Scania CV AB**
**Patents, GP 117kv**
**151 87 Södertälje (SE)**

(54) **METHOD AND SYSTEM FOR DETECTION OF CHANGE IN VEHICLE MASS**

(57) The present invention provides a method and a system for determination of whether a change of an actual mass m for a vehicle has occurred. The system comprises a first determination device, arranged for determination of at least one variable related to a rolling resistance $F_{rr}$ for the vehicle, after the vehicle has been set into motion. Each one of these at least one variables corresponds to a previous vehicle mass $m_i$, which is comprised in a mass history $m_1, m_2, ... m_l$ for the vehicle. The system also comprises a second determination device, arranged for determination of whether a change of the actual vehicle mass m has occurred, based on the at least one determined variable related to a rolling resistance $F_{rr}$ for the vehicle, and on the mass history $m_1, m_2, ... m_l$ for the vehicle. The system also comprises an utilisation device, which is arranged for the use of the determination of whether a change of the actual vehicle mass m has occurred.

200

[201]
Determination of at least one variable related to a rolling resistance for the vehicle, corresponding to mass in a mass history

[202]
Determination as to whether a change of the actual mass for the vehicle has occurred, based on the variable related to rolling resistance and on mass history

[203]
Use of determination of whether the change has occurred

Fig. 2

EP 2 933 614 A1

## Description

### Technical field

The present invention relates to a method for determination of whether a change of an actual mass $m$ for a vehicle has occurred, according to the preamble of claim 1. The present invention also relates to a system, arranged for the determination of whether a change of an actual mass $m$ for a vehicle has occurred, according to the preamble to claim 18, and a computer program and a computer program product, which implement the method according to the invention.

### Background

The following background description constitutes a description of the background to the present invention, and thus need not necessarily constitute prior art.

In automated transmission systems for vehicles with a manual gearbox, the gear selection is based on sev18eral parameters, such as road gradient and the vehicle's driving resistance. In order for the transmission system to make correct gear selections, information is required about the mass of the vehicle. Usually, several estimations of the vehicle's mass are carried out during driving/operation, and a final mass is selected and then used as an input parameter in the transmission system to calculate the current gear.

Prior art methods for estimation of vehicle mass are based on an acceleration of the vehicle and, in applicable cases, information from an air suspension system, if such a system is arranged in the vehicle.

For vehicles with a load detecting system, such as an air suspension system, a prior art method for estimation of the vehicle's mass is based on the air suspension. In such a system, the axle load is measured, which may be directly converted to a vehicle mass with the use of information about the vehicle type. Other prior art methods to estimate the mass are based on the vehicle's acceleration and/or deceleration. These use the force equation, which requires that the vehicle has a sufficiently high acceleration for the estimation to be accurate.

Some vehicles, for example construction vehicles or similar, often do not comprise air suspension, but instead comprise a more robust leaf suspension system, which is not a load detecting system. Thus, for example construction vehicles, that is to say a type of vehicle that is used in heavier operation, such as tippers, mining vehicles and timber vehicles, usually comprise leaf suspension systems, which means that the vehicle mass may not be directly estimated with the assistance of the suspension system. An estimation of the vehicle mass $m$ for these types of vehicle instead usually uses the vehicle's acceleration and the force equation; $F = ma.$ Here, the force $F$ is the sum of the forces acting on the vehicle, that is to say the driving force, the rolling resistance, the air resistance and the resistance caused by the road gradient. The use of the force equation means that such estimation may not be used when the vehicle is at a standstill, since the acceleration is zero in stationary vehicles. Additionally, the estimation is more accurate and/or reliable at higher accelerations.

### Brief description of the invention

If a change in the vehicle mass, for example by way of a loading or unloading of the vehicle, has occurred without the system in the vehicle having knowledge about the vehicle mass having changed, the system in the vehicle will wrongly assume that the vehicle's current mass after the change is equal to the vehicle's mass before the change. There is a risk that the wrongly assumed mass may then result in the automatic gear selection incorrectly selecting a non-optimal gear.

A non-limiting example of such a scenario for a construction vehicle could be that an unloaded construction vehicle with a leaf suspension system drives down into an open pit where it is loaded, in order subsequently to drive up from the open pit to unload. At the start following the loading, the transmission system will base the gear selection on the most recently estimated mass, which was estimated before the loading of the vehicle. Since the most recently estimated mass is the estimated mass before the loading, this mass will differ significantly from the actual current vehicle mass. The significantly larger mass at the occasion of the gear selection, of which mass the transmission is ignorant, will here probably result in an incorrect gear selection, and/or unnecessary wear of a clutch in the vehicle.

This is especially serious, since the estimated mass is too low in relation to the actual mass. A serious problem may arise if the vehicle at this stage reaches an uphill slope with a selected gear which is too high, with a risk that the vehicle may stall and stop on the slope. Downtime of this type results in financial disadvantages because of traffic jams created in, for example, a mine tunnel, and may also constitute a significant safety risk in for example a mine. Additionally, such breakdowns are very irritating, and sometimes even frightening, to a driver.

Estimation of vehicle mass with the force equation is also more difficult if the current base on which the vehicle is driving does not have a hard and/or even surface, that is to say if the base is made of a material other than asphalt or concrete, for example. For example, the mass estimation is more difficult on soft bases such as sand and rolling gravel, since the rolling resistance varies significantly on such bases, which obstructs the possibility of calculating a correct driving resistance to be used in the estimation of the mass of the vehicle. Additionally, heavy goods vehicles very rarely accelerate considerably on uphill slopes or slippery basses, which means that methods requiring considerable accelerations to provide reliable mass estimations are rarely applicable to, for example, construction vehicles.

The above shows that there is a need for an improved method to detect whether a change of the mass has occurred, especially for vehicles driven on soft and/or uneven surfaces, where prior art methods are not applicable or less suitable.

This objective is achieved through the above-mentioned method in accordance with the characterising portion of claim 1. The objective is also achieved through the above-mentioned system according to the characterising portion of claim 18, and the above mentioned computer program and computer program product.

At the use of the present invention, in connection with the vehicle being set in motion, at least one variable related to a rolling resistance $F_{rr}$ for the vehicle is determined. Each one of the one or several determined variables relating to rolling resistance $F_{rr}$ here corresponds to a previous vehicle mass $m_i$, which the vehicle had at a time before the determination was made, and which is thus comprised in a mass history $m_1, m_2, ... m_l$ for the vehicle.

Subsequently, it is determined whether a change of the actual vehicle mass $m$ has occurred. Such determination is based on the at least one determined variable and on the mass history $m_1, m_2, ... m_l$ for the vehicle.

At the determination/identification of changes in the actual vehicle mass $m$ knowledge about previous masses of the vehicle is thus used, that is to say mass history $m_1, m_2, ... m_l$, jointly with the at least one determined variable is used to discover whether a change of the actual mass $m$ has occurred.

Determined/identified changes in the actual vehicle mass $m$ are then used via a utilisation device, for example at control of automatic gear selection, and/or to initiate estimations of the vehicle's actual mass $m$.

Many vehicles are frequently loaded with relatively equal loads over time. This is used by the present invention to streamline and simplify the identification of whether the actual vehicle mass has changed. The present invention tests, whether there has occurred a change of the actual vehicle mass to a mass present in the mass history. By limiting the possible masses that the test is to comprise to those in the mass history, the calculation capacity required is also limited, while the method may be completed quickly. Additionally, the system's sensitivity is reduced considerably through the use of mass history at the detection and/or estimation.

The present invention may advantageously be used as a complement to traditional mass estimation for vehicles. The traditional mass estimation may then be carried out, if the conditions for mass estimation are favourable, for example when driving on asphalt or similar hard and even bases. The present invention may then be used if the conditions are unfavourable for traditional mass estimation, for example when a vehicle is driving in terrain, on an uneven base, on a slippery base and/or on a soft base. Through the mass history, the system has access to reliable values for the vehicle mass, which have been estimated in favourable conditions. The system may subsequently use these masses in the mass history, in connection with the identification of possible changes in the vehicle mass. If a change is identified, new mass estimations may thereafter be initiated. Thus, the present invention may advantageously be used to provide approximate guesses of the vehicle mass in conditions where the traditional mass estimations provide unreliable and/or inaccurate estimations.

Through the use of the present invention, a reloading may quickly be detected directly after start, for example within a few seconds from start, since the method according to the invention may be implemented in direct connection with the vehicle starting to move. This is possible since the present invention does not require that a relatively large acceleration must be present in order for a reliable result to be provided. This is very advantageous since, for example, heavy goods vehicles rarely accelerate considerably, especially construction vehicles driving up into mine tunnels or similar.

The fact that a reloading may, according to the present invention, be detected substantially directly when the vehicle begins to move, means that the automatic transmission system is able to correct these assumptions related to vehicle mass, already before the first gear change occurs after the vehicle is set into motion. This means that the first gear selection after the vehicle has been set into motion will most probably be correct, even if the starting gear should be incorrect due to lack of knowledge about reloading during the standstill.

Changes in the actual vehicle mass may, according to the invention, also be detected on the vehicle without any load detecting system, such as on vehicles that lack an air suspension system. The detection may also be made on soft bases and on slopes.

If a reloading has been determined, that is to say if a change of the actual vehicle mass has been determined, an earlier estimation of the vehicle mass may be updated with the use of the present invention. Subsequently, an automatic gear selection in the vehicle may, for example, use the updated value for the vehicle mass, which means that the risk of incorrect gear selections is considerably reduced.

The detection of changes in the actual vehicle mass may, potentially completed with a new mass estimation, also be used to reduce the risk of incorrect decisions, and/or to increase accuracy for substantially all control systems using the actual vehicle mass in their calculations. For example, cruise control systems in the vehicle may benefit from availability of more reliable estimations of the actual vehicle mass.

**Brief list of figures**

The invention will be illustrated in more detail below, along with the enclosed drawings, where similar references are used for similar parts, and where:

Figure 1 shows a schematic example vehicle in which the present invention may be implemented,

Figure 2 shows a flow chart for a method according to one embodiment of the present the invention,

Figure 3 shows an example of a mass history,

Figure 4 shows a flow chart for a method according to one embodiment of the present the invention,

Figures 5a-b show flow charts for the method according to one embodiment of the present invention, and

Figure 6 shows a schematic control device in which the present invention may be implemented,

Figures 7 shows simulation results.

**Description of preferred embodiments**

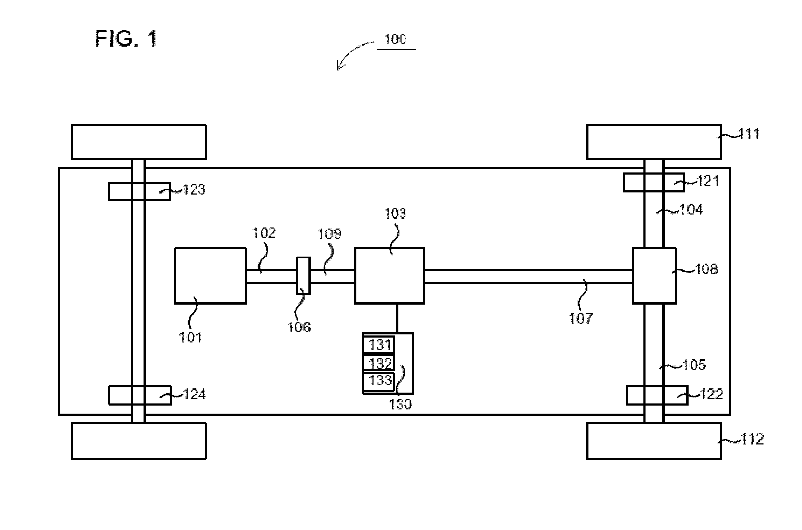

Fig. 1 schematically shows a powertrain in a vehicle 100, in which the present invention may be implemented. The powertrain comprises one combustion engine and/or an electric motor 101, which in a customary manner, via an output shaft 102 on the combustion engine 101, usually via a flywheel, is connected to an input shaft 109 in a gearbox 103, via a clutch 106. The gearbox 103 is here illustrated schematically as one unit. However, the gearbox 103 may also physically consist of several cooperating gearboxes, for example a so-called range gearbox, a main gearbox and a split gearbox, which are arranged along the vehicle's powertrain.

The vehicle 100 further comprises drive shafts 104, 105, which are connected to the vehicle's driving wheels 111, 112, and which are operated by an output shaft 107 from the gearbox 103, via a shaft gear 108, such as a customary differential shaft. The vehicle 100 also comprises additional wheels, which may be driving or non-driving, and may be arranged for control of the vehicle.

The vehicle 100 comprises a suspension system 121, 122, 123, 124, such as for example a leaf suspension system, arranged to provide suspension of the vehicle's wheels.

The vehicle also comprises at least one control device 130. The control device 130 is arranged to carry out the method according to the present invention, which is described in more detail below. The control device 130 may also be arranged for control of the gearbox 103, where the determination of whether there is a change in the vehicle mass, provided by the present invention, is used for the control of the gearbox. Thus, the gear selection in the vehicle 100 may be based on information provided by the method according to the present invention.

The control device 130, which carries out the method according to the invention, and the control device for the gearbox 103 are schematically displayed in the figure as a joint control device. However, the control of the gearbox may be implemented in a separate control device.

The information provided by the present invention may also be used by other systems in the vehicle requiring knowledge about vehicle mass. Thus, functions for control of such other systems may be implemented in the control device 130, or may be implemented in one or several control devices that communicate with the control device 130. In the figure, only one clutch between the control device 130 and the gearbox 103 has been drawn in. However, a person skilled in the art will realise that corresponding clutches are required between control devices and other systems to be controlled, based on information provided by the present invention.

The vehicle mass changes often over the time during which the vehicle is used, for example because of unloading and/or loading, and/or because of disembarking and/or embarking passengers. Since the vehicle mass is an important parameter for control of several systems in the vehicle, the mass is estimated at regular intervals or at irregular intervals. When the vehicle is on hard, solid, and/or even bases the vehicle mass may be estimated with relatively good accuracy. However, estimation of the vehicle mass is problematic when the vehicle is located on other bases, that is to say on bases which for example are soft, uneven, and/or inclined. Some types of vehicles, such as for example construction vehicles, during a relatively large part of the operating time are driven on bases where mass estimation is problematic, which leads to the above described problems related to incorrectly estimated vehicle masses.

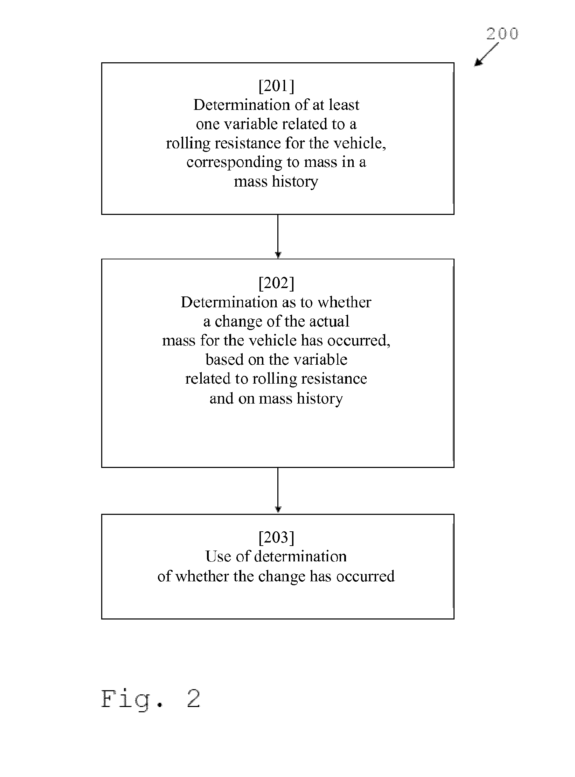

Figure 2 shows a flow chart for a method according to the present invention, which is intended to at least partly solve these problems.

In a first step 201 of the method, at least one variable, relating to a rolling resistance $F_{rr}$ for the vehicle 100, is determined, for example with the use of the first determination unit 131 described below, after the vehicle 100 has been set into motion. This variable may, according to one embodiment, consist of a rolling resistance coefficient $C_{rr}$, as described in more detail below. Each one of the one or several determined variables related to rolling resistance $F_{rr}$ here corresponds to a previous vehicle mass $m_i$, which the vehicle 100 had on a previous occasion, before the determination was made. Thus, the previous vehicle mass $m_i$ is here comprised in a mass history $m_1, m_2, ... m_l$ for the vehicle 100.

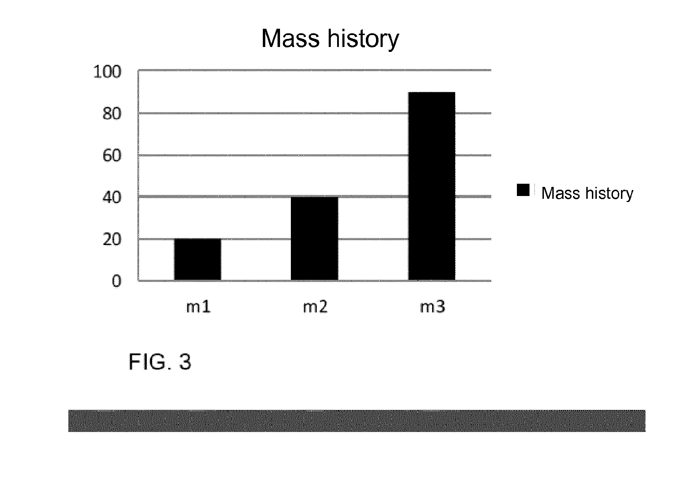

Completed estimations of the vehicle mass may be compiled in a mass history. Figure 3 shows schematically a non-limiting example of such a mass history. The mass history displayed in Figure 2 comprises three different vehicle masses; m1 = 20.4 ton, which may for example represent an unloaded vehicle; m2 = 40 ton, which may for example represent a partly loaded vehicle; and m3 = 90 ton, which may for example represent a fully loaded vehicle.

The different masses in the mass history may be determined in a number of different ways, for example through the use of the force equation, such as described above, when the vehicle is located on a base that results in good accuracy for the mass estimations. Substantially all known types of mass estimation may be used at the compilation of this mass history.

In a second step 202 of the method, it is determined, for example with the use of the second determination device 132, described below, whether a change of the actual mass $m$ for the vehicle 100 has occurred. This determination is based, according to the present invention, on the at least one variable, which is related to the rolling resistance $F_{rr}$ for the vehicle 100, determined in the first step 201, and on the mass history $m_1, m_2, ... m_l$ for the vehicle 100. Here, knowledge about previous masses which the vehicle has had, that is to say the mass history, is used, $m_1, m_2, ... m_l$ together with the at least one determined variable, in order to discover whether a change of the actual mass $m$ has occurred. It has become apparent that some vehicles, for example construction vehicles or similar vehicles, often repeat their vehicle masses over time. Therefore, it is often quick and efficient to use knowledge about these previous vehicle masses, that is to say the mass history $m_1, m_2, ... m_l$, at the determination of whether the actual mass $m$ for the vehicle 100 has changed, since the use of the mass history limits the choice of potential vehicle masses, and thus also limits the number of calculations that need to be carried out. The values in the mass history $m_1, m_2, ... m_l$ may further be determined in conditions that result in reliable estimations of the vehicle mass.

In a third step 203 of the method, the determination from the second step 202, of whether a change of the actual mass $m$ for the vehicle 100 has occurred in the vehicle, is used, for example with the use of the utilisation device 133, described below. According to one embodiment of the present invention, this knowledge is used as a parameter at automatic gear selection in a gearbox 103 in the vehicle 100, as described in more detail below. This knowledge may also be used in other systems in the vehicle, for example to trigger new estimations of the vehicle's actual mass $m$.

According to one embodiment, the at least one variable related to the rolling resistance $F_{rr}$, and which is determined in the method's first step 201, may consist of at least one respective rolling resistance coefficient $C_{rr\_i}$. Thus, here at least one rolling resistance coefficient is determined, $C_{rr\_i}$ corresponding to at least one respective previous vehicle mass $m_i$, comprised in the mass history $m_1, m_2, ... m_l$. In other words, for at least one previous vehicle mass, $m_i$ comprised in the mass history, $m_1, m_2, ... m_l$ a value for a corresponding rolling resistance coefficient is determined $C_{rr\_i}$.

The rolling resistance $F_{rr}$ is comprised in a force equation for forces acting on the vehicle 100.

Newton's second law, also called the force equation, may be written as:

$$F_{trac} - m_i g sin(\alpha) - g m_i C_{rr} - F_{air} = m_i a \qquad \text{(equation 1)}$$

Where:

$F_{trac}$ is a driving force on the driving wheels;

$m_i$ is a vehicle mass $i$;

$g$ is the gravitational constant;

$\alpha$ is a road gradient for a base on which the vehicle is travelling;

$C_{rr}$ is the rolling resistance coefficient;

$F_{air}$ is an air resistance force;

*a* is a vehicle acceleration.

The air resistance force $F_{air}$ may often be neglected in equation 1, since the air resistance is low at low speeds, at which for example construction vehicles travel. A person skilled in the art will realise that the vehicles, such as for example construction vehicles, which travel on bases that are not solid and flat, keep relatively low speeds.

Equation 1 may then be written as:

$$\frac{F_{trac}}{m_i} - gsin(\alpha) - gC_{rr} = a \qquad \text{(equation 2)}$$

If $gC_{rr}$ is solved, the following is obtained:

$$gC_{rr_i} = \frac{F_{trac}}{m_i} - a - gsin(\alpha) \qquad \text{(equation 3)}$$

By using equation 3, the rolling resistance coefficient $C_{rr_i}$ may then be calculated for the respective mass $m_i$ in the mass history.

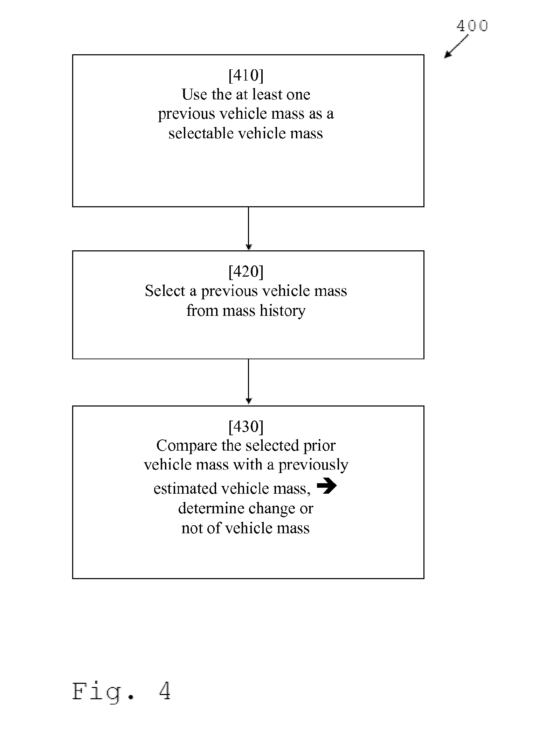

Figure 4 shows a flow chart for one embodiment of the present invention, where the method 400 to determine whether the actual vehicle mass $m$ has changed comprises a first step 410, in which the at least one previous vehicle mass $m_i$ in the mass history $m_1, m_2, ... m_l$ is used as a selectable vehicle mass.

In a second step 420 of the method, a previous vehicle mass $m_1, m_2, ... m_l$ is selected from the mass history $m_{i\_guess}$. This selection is advantageously made in such a way that the selected previous vehicle mass $m_{i\_guess}$ is in some respect similar to the actual vehicle mass $m$, which is described in more detail below.

In a third step 430 of the method, the selected previous vehicle mass is compared $m_{i\_guess}$ with a previous estimated vehicle mass $m_{est\_old}$, in order to determine whether a change of the actual vehicle mass has occurred $m$. A change of the actual mass $m$ may here be determined, if the selected previous vehicle mass $m_{i\_guess}$ differs from the previously estimated vehicle mass $m_{est\_old}$.

If a change of the actual vehicle mass $m$ is identified, and if a previous vehicle mass $m_{i\_guess}$ is deemed to be the probable actual vehicle mass $m$, this probable vehicle mass $m_{i\_guess}$ may be used as a new updated value for the estimated vehicle mass $m_{est\_new} = m_{i\_guess}$, as described below. Thus, the previously estimated vehicle mass $m_{est\_old}$ constitutes a value for the vehicle mass, corresponding to the mass which the system in the vehicle believes that the vehicle has.

As a non-limiting example, if a construction vehicle weighs 20 tons when it descends into a mine, the previous estimated vehicle mass is $m_{est\_old}$ equal to 20 tons. Subsequently, the vehicle is reloaded so that it weighs 90 tons, but the system is not yet aware of this, so that the previously estimated vehicle mass $m_{est\_old}$ is still equal to 20 tons. According to the embodiment, a previous vehicle mass $m_1, m_2, ... m_l$ would then be selected from the mass history $m_{i\_guess}$, in such a way that the previous vehicle mass $m_{i\_guess}$ is in some respect similar to the actual vehicle mass $m$, whereat the previous vehicle mass $m_{i\_guess}$ equal to 90 tons would be selected if the mass history in Figure 3 were available. Subsequently, the selected previous vehicle mass $m_{i\_guess}$ 90 tons is compared with the previously estimated vehicle mass $m_{est\_old}$ 20 tons, in order to determine whether a change of the actual vehicle mass $m$ has occurred, which will then be confirmed to have occurred. Subsequently, the selected previous vehicle mass $m_{i\_guess}$ may be used as a new updated value for the estimated vehicle mass $m_{est\_new} = m_{i\_guess} = 90$ tons at subsequent repetitions of the method according to the embodiment.

Thus, the present invention may advantageously be used to provide approximate guesses of the vehicle mass in conditions where the traditional mass estimation methods provide unreliable, and/or inaccurate, estimations.

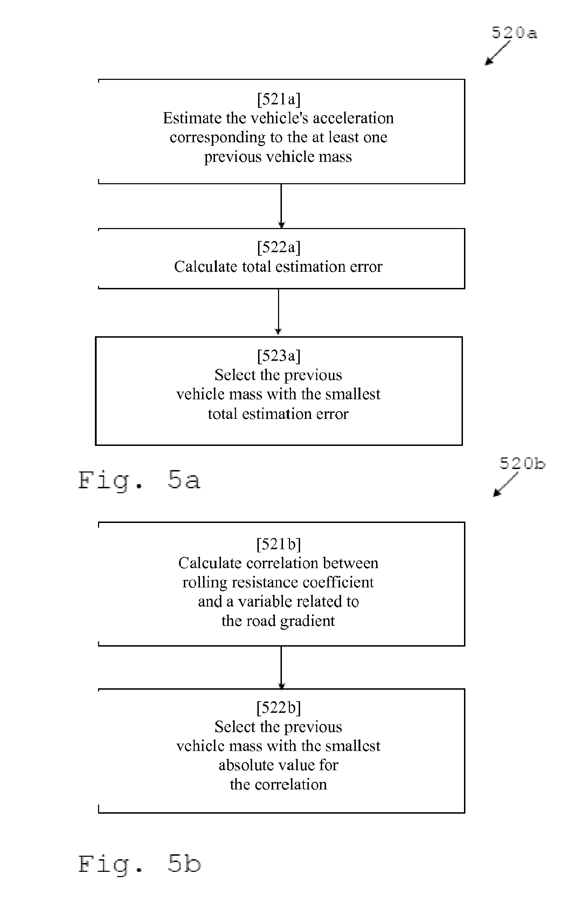

The selection of the previous vehicle mass $m_{i\_guess}$ from the mass history $m_1, m_2, ... m_l$ in the second step 420 in Figure 4 may be made in several ways. Figures 5a and 5b display, with flow charts for two embodiments of the method 520a, 520b, how this selection may be made.

According to the flow chart in Figure 5a, in a first step 521a at least one vehicle acceleration $\tilde{a}_i$, corresponding to the respective at least one previous vehicle mass, is estimated $m_i$. Thus, a vehicle acceleration is estimated $\tilde{a}_i$ for each one of the one or several previous vehicle masses $m_i$ to be analysed, which may be done according to:

$$\tilde{a}_i = -gC_{rr_i} + \frac{F_{trac}}{m_i} - a - gsin(\alpha) ; \qquad \text{(equation 4)}$$

In a second step 522a, a total estimation error $x_i$ is calculated, corresponding to a summation of the at least one determined vehicle acceleration $\tilde{a}_i$ in relation to an actual vehicle acceleration $a$ for the vehicle 100, which may be done according to:

$$x_i = \sum_{j=1}^{N} \left( a_j - \tilde{a}_{i,j} \right) \qquad \text{(equation 5)}$$

Where $a_j$ is the actual acceleration, measured with one or several sensors in the vehicle in a prior art manner. $N$ are measured samples over the time period for the method according to the present invention, which according to one embodiment is sufficiently brief to be completed before a first gear shift, after the vehicle has been set into motion.

In a third step 523a of the method, the previous vehicle mass $m_{i\_guess}$ with the elast estimation error $x_{i\_guess}$ for the corresponding estimated vehicle acceleration $\tilde{a}_i$ is selected; $i_{guess} = \min(x_i)$. Subsequently, the selected previous vehicle mass $m_{i\_guess}$ is compared with a previously estimated vehicle mass $m_{est\_old}$, in order to determine whether a change of the actual vehicle mass $m$ has occurred. A change of the actual mass $m$ may here be determined, if the selected previous vehicle mass $m_{i\_guess}$ differs from the previous estimated vehicle mass $m_{est\_old}$, as described above.

According to one embodiment, the selection of the previous vehicle mass $m_{i\_guess}$ is carried out, if the total estimation **error** $x_i$ for the corresponding at least one determined vehicle acceleration $\tilde{a}_i$ in relation to the actual vehicle acceleration $a$ is less than a threshold value $x_{i\_th}$; $x_i < x_{i\_th}$; that is to say when the estimation error converges. The duration of the method according to the present invention is completed when a sufficient convergence has been obtained.

After the selection, an updated value $m_{est\_new}$ for the actual vehicle mass $m$ may also be determined, whereat such updated estimated value $m_{est\_new}$ is equal to the value for the selected previous vehicle mass $m_{i\_guess}$; $m_{est\_new} = m_{i\_guess}$; which may also be expressed as $m_{est\_new} = m(i_{guess})$.

According to one embodiment of the present invention, the selection of the previous vehicle mass $m_{i\_guess}$ from the mass history $m_1, m_2, ... m_l$ is carried out in the second step 420 in Figure 4 according to the flow chart in Figure 5b.

In a first step 521b, at least one respective value for a correlation $\rho(C_{rr}; a + gsin(\alpha))$ for the at least one variable corresponding to the previous vehicle mass $m_i$ from the mass history $m_1, m_2, ... m_l$, and a variable $a + sin(\alpha)$ related to a road gradient $\alpha$ that the vehicle 100 experiences, are calculated.

It should be mentioned that the variable $a + sin(\alpha)$ related to the road gradient $\alpha$ is the variable which a longitudinal accelerometer most often measures. As mentioned above, the at least one variable here constitutes at least one respective rolling resistance coefficient $C_{rr\_i}$.

The correlation for two variables $x$ and $y$ may be calculated as:

$$\rho(x, y) = \frac{\frac{1}{N} \Sigma_1^N (x - \bar{x})(y - \bar{y})}{\sqrt{\frac{1}{N} \Sigma_1^N (x - \bar{x})^2 \frac{1}{N} \Sigma_1^N (y - \bar{y})^2}} \qquad \text{(equation 6)}$$

Where $\bar{x}$ and $\bar{y}$ constitute average values for the respective magnitudes. When the correlation is to be calculated according to the embodiment, $x = C_{rr}$ and $y = a + gsin(\alpha)$ are thus comprised in equation 6. The correlation according to equation 6 may be viewed as a type of estimation error.

In a second step 522b the previous vehicle mass $m_{i\_guess}$ with the smallest absolute value $min|\rho(C_{rr}; a + gsin(\alpha))|$ for the value of the correlation is selected. Then, the previous vehicle mass selected from the mass history $m_{i\_guess}$ is compared with a previously estimated vehicle mass $m_{est\_old}$, in order to determine whether a change of the actual vehicle mass $m$ has occurred. A change of the actual mass $m$ may here be determined, if the selected previous vehicle mass $m_{i\_guess}$ differs from the previous estimated vehicle mass $m_{est\_old}$, as described above.

The correlation may be defined as a covariance between two variables, the variables $x$ and $y$, in equation 6, divided by the standard deviations for these variables multiplied with each other. In equation 6, the waiting values are set as average values for the variables $\bar{x}$ and $\bar{y}$. The basic assumption for mass estimation with the use of the correlation is that the rolling resistance, and thus the rolling resistance coefficient $C_{rr\_i}$, is uncorrelated with the variable $a + sin(\alpha)$. Thus, the correlation $\rho(C_{rr}; a + gsin(\alpha))$ should give a value near zero.

The rolling resistance, and thus also the rolling resistance coefficient $C_{rr\_i}$, depends on the actual vehicle mass $m$. Therefore, an incorrect previous estimation of the vehicle mass $m_{est\_old}$ will result in the rolling resistance, and therefore the rolling resistance coefficient $C_{rr\_i}$, having an incorrect value, which also entails a risk that $C_{rr\_i}$ the rolling resistance coefficient may no longer be correlated with the variable $a + sin(\alpha)$. Thus, an incorrect previous estimation of the vehicle mass $m_{est\_old}$ may mean that the correlation $\rho(C_{rr}; a + gsin(\alpha))$ has a non-zero value. Therefore, with the use of this embodiment the previous vehicle mass $m_{i\_guess}$ that gives the smallest absolute value $min|\rho(C_{rr}; a + gsin(\alpha))|$ is sought, which will then result in the least incorrect, that is to say the most correct, value for the previous vehicle mass $m_{i\_guess}$.

If a change of the actual vehicle mass $m$ is identified, and if a previous vehicle mass $m_{i\_guess}$ is deemed to be the probable actual vehicle mass **m,** then such probable vehicle mass $m_{i\_guess}$ may be used as a new updated value for the estimated vehicle mass $m_{est\_new} = m_{i\_guess}$. Thus, the previously estimated vehicle mass $m_{est\_old}$ constitutes the value for the vehicle mass, corresponding to the mass, which the system in the vehicle believes the vehicle to have, as described above.

According to one embodiment of the present invention, the selection 420 of a previous vehicle mass $m_{i\_guess}$ is made before a gear shift in a gearbox 103 in the vehicle 100 has been completed, and after the vehicle 100 has been set into motion, that is to say directly when the vehicle begins to move. Accordingly, a new detection of a change in the vehicle mass is made directly after a loading and/or unloading has probably occurred, that is to say when the vehicle is at a standstill.

According to the present invention, the selection 420 of a previous vehicle mass $m_{i\_guess}$ is made after a predetermined number of gear changes in a gearbox in the vehicle having occurred since the vehicle was most recently at a standstill. A reloading of the vehicle nearly always occurs when the vehicle is at a standstill, and it is therefore advantageous to link the selection to the vehicle's standstill.

As mentioned above, the previously estimated vehicle mass $m_{est\_old}$ has a value, which has been estimated for the vehicle's actual mass $m$ before the method 200, 400, according to embodiments of the present invention, is carried out for identification of changes of an actual vehicle mass $m$.

The mass history $m_1, m_2, ... m_l$ for the vehicle 100 comprises, as mentioned above, at least one previous vehicle mass $m_i$, which the vehicle had before the method 200, 400, according to embodiments of the present invention, is carried out for identification of changes in an actual vehicle mass $m$.

The mass history $m_1, m_2, ... m_l$ comprises, according to one embodiment, at least two sets of at least one previous vehicle mass $m_i$, wherein each one of the at least two sets are related to different load capacities for the vehicle 100. For example, a first set with previous vehicle masses $m_i$ may comprise values corresponding to a truck without a trailer, and a second set with previous vehicle masses $m_i$ may comprise values corresponding to a truck with a trailer. It is easy to realise that the values in the set with a trailer should be greater than the corresponding values without a trailer.

The present invention may advantageously be used in a vehicle with automatic gear selection for the gearbox 103, wherein the identification of changes in the actual vehicle mass **m** is used at the control of the automatic gear selection.

According to one aspect of the present invention, a system is provided for determination of whether a change of an actual mass $m$ for the vehicle 100 has occurred. The system comprises a first determination device 131, arranged for the determination 201 of at least one variable related to a rolling resistance $F_{rr}$ for the vehicle. Each one of these at least one variables corresponds to a previous vehicle mass $m_i$, which is comprised in a mass history $m_1, m_2, ... m_l$ for the vehicle. The first determination device 131 is arranged to carry out this determination 201 of said at least one magnitude after the vehicle has been set into motion, that is to say in connection with the vehicle starting to move off after having been stationary.

The system also comprises a second determination device 132, which is arranged for determination 202 of whether a change of the actual vehicle mass $m$ has occurred. The second determination device 132 is arranged to base the determination 202 of whether a change has occurred on the at least one determined variable related to a rolling resistance $F_{rr}$ for the vehicle 100, and on the mass history $m_1, m_2, ... m_l$ for the vehicle 100.

The system also comprises a utilisation device 133, which is arranged to use 203 the determination of whether a change of the actual vehicle mass has occurred. $m$ The utilisation device 133 may here typically be arranged to provide the information that the actual vehicle mass has changed to control systems for control of automatic gear selection, and/or to control systems that control mass estimations in the vehicle, whereat an updated mass estimation may be initiated if a change in the vehicle mass has been identified through the method according to the present invention.

A person skilled in the art will realise that a method according to the present invention, for the determination of whether a change of an actual mass **m** for a vehicle has occurred, may also be implemented in a computer program, which when executed in a computer will cause the computer to execute the method. The computer program usually forms a part of a computer program product 603, where the computer program product comprises a suitable digital non-volatile / permanent / persistent / durable storage medium on which the computer program is stored. Said non-volatile/permanent/persistent/durable computer readable medium consists of a suitable memory, e.g.: ROM (Read-Only Memory), PROM (Programmable Read-Only Memory), EPROM (Erasable PROM), Flash, EEPROM (Electrically Erasable PROM), a hard disk device, etc.

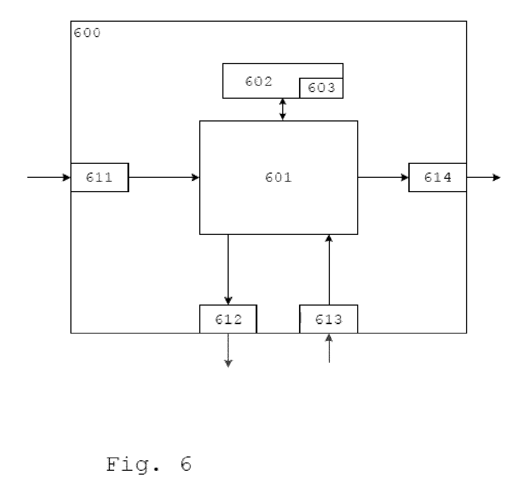

Figure 6 schematically shows a control device 600. The control device 600 comprises a calculation device 601, which may consist of substantially any suitable type of processor or microcomputer, e.g. a circuit for digital signal processing (Digital Signal Processor, DSP), or a circuit with a predetermined specific function (Application Specific Integrated Circuit, ASIC). The calculation device 601 is connected to a memory unit 602 installed in the control device 600, providing the calculation device 601 with e.g. the stored program code and/or the stored data which the calculation device 601 needs in order to be able to carry out calculations. The calculation unit 601 is also set up to store interim or final results of calculations in the memory unit 602.

Further, the control device 600 is equipped with devices 611, 612, 613, 614 for receipt and sending of input and output signals, respectively. These input and output signals may contain wave shapes, pulses, or other attributes, which may be detected as information by the devices 611, 613 for the receipt of input signals, and may be converted into signals that may be processed by the calculation device 601. These signals are then provided to the calculation device 601. The devices 612, 614 for sending output signals are arranged to convert the calculation result from the calculation device 601 into output signals for transfer to other parts of the vehicle's control system, and/or the component(s) for which the signals are intended, for example to control systems for automatic gear selection, and/or for vehicle mass estimation.

Each one of the connections to the devices for receiving and sending of input and output signals may consist of one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation device 601, and that the above-mentioned memory may consist of the memory unit 602.

Generally, control systems in modern vehicles consist of a communications bus system, consisting of one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown thus often comprise significantly more control devices than shown in Figures 1 and 6, as is well known to a person skilled in the art within the technology area.

The present invention, in the embodiment displayed, is implemented in the control device 600. The invention may, however, also be implemented wholly or partly in one or several other control devices already existing in the vehicle, or in a control device dedicated to the present invention.

The system according to the present invention may be arranged to carry out all of the method embodiments described above and in the claims, wherein the system for the respective embodiment achieves the above described advantages for the respective embodiment.

A person skilled in the art will also realise that the system for the determination of whether a change of an actual mass m for a vehicle has occurred, may be modified according to the different embodiments of the method according to the invention. In addition, the invention relates to a motor vehicle 100, for example a truck or a bus, comprising at least one system for determination of whether a change of an actual mass $m$ for a vehicle has occurred.

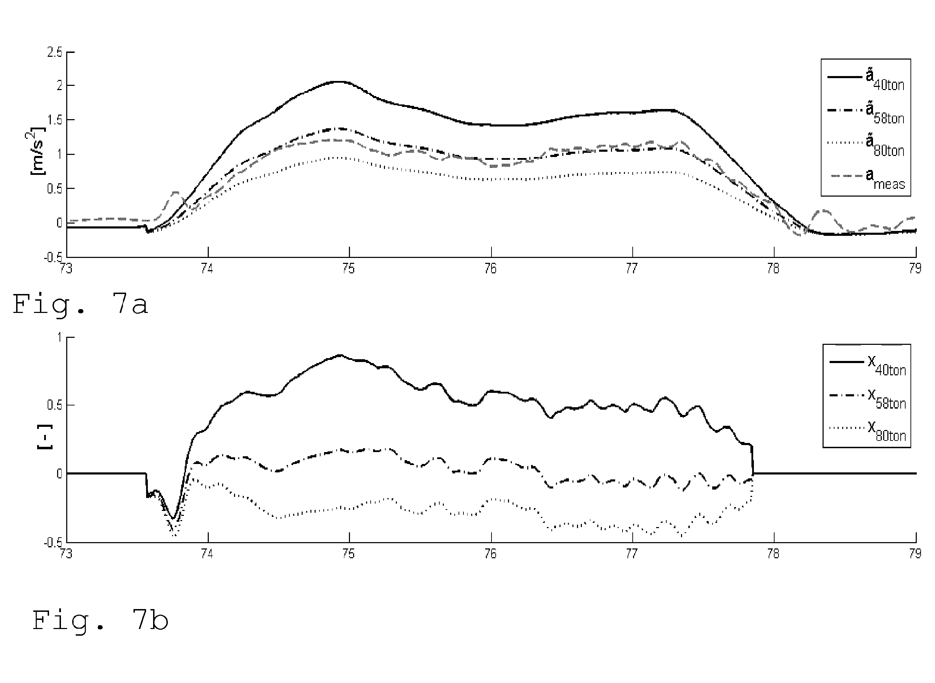

The Figures 7-b show the simulation result for the method displayed in Figure 4 and Figure 5a. Figure 7a graphically shows the result for a non-limiting example of values for estimation of three different vehicle accelerations $\tilde{a}_i$, corresponding to three different previous vehicle masses $m_i$; a solid curve representing 40 tons, a dot-dashed curve representing 58 tons, a dotted curve representing 80 tons, and a dashed curve representing the measured acceleration $a_j$. The three different vehicle accelerations $\tilde{a}_i$ have here been calculated with the use of equation 4 above.

Figure 7b shows the total estimation error $x_i$ that may be calculated with the use of equation 5 above, for the estimation of the three different vehicle accelerations $\tilde{a}_i$ displayed in Figure 7a, that is to say; a solid curve representing 40 tons, a dot-dashed curve representing 58 tons and a dotted curve representing 80 tons. As displayed in Figure 7b, the estimation error for 58 tons (dot-dashed curve) is the smallest, which means 58 tons is selected as the previous vehicle mass $m_{i\_guess}$ according to one embodiment of the invention, and that a change of the actual vehicle speed may be identified if the previously estimated vehicle mass $m_{est\_old}$ is not 58 tons.

The present invention is not limited to the embodiments of the invention described above, but relates to and comprises all embodiments within the scope of the enclosed independent claims.

**Claims**

1. Method (200) for determination of whether a change of an actual mass $m$ for a vehicle (100) has occurred; **characterised by**

   - determination (201) of at least one variable related to a rolling resistance $F_{rr}$ for said vehicle (100), wherein each one of said at least one variable corresponds to a previous vehicle mass $m_i$, which is comprised in a mass history $m_1, m_2, ... m_l$ for said vehicle (100), and wherein said determination of said at least one magnitude is carried out after said vehicle has been set into motion;
   - determination (202) of whether a change of said actual mass m for said vehicle (100) has occurred, wherein said determination of whether said change has occurred is based on said at least one determined variable related to a rolling resistance $F_{rr}$ for said vehicle (100), and on said mass history $m_1, m_2, ... m_l$ for the said vehicle (100) ;
- use (203) of said determination of whether said change of said actual mass $m$ has occurred.

2. Method (200) according to claim 1, wherein said rolling resistance $F_{rr}$ is comprised in a force equation for forces acting on said vehicle.

3. Method (200) according to any of claims 1-2, wherein said at least one variable related to said rolling resistance $F_{rr}$ consists of at least one respective rolling resistance coefficient $C_{rr\_i}$.

4. Method (200) according to any of claims 1-3, wherein said method comprises:

- use of the at least one previous vehicle mass $m_i$ in said mass history $m_1, m_2, ... m_l$ as at least one selectable vehicle mass at said determination of whether a change of said actual mass $m$ for said vehicle (100) has occurred,
- selection of a previous vehicle mass $m_{i\_guess}$ from said mass history $m_1, m_2, ... m_l$, wherein said selected previous vehicle mass $m_{i\_guess}$ is similar, in some respect, to said actual mass $m$;
- comparison of said selected previous vehicle mass $m_{i\_guess}$ with a previously estimated vehicle mass $m_{est\_old}$, in order to determine whether said change of said actual mass **m** for said vehicle (100) has occurred.

5. Method (200) according to any of claims 1-4, wherein said method comprises:

- estimation of at least one vehicle acceleration $\tilde{a}_i$, corresponding to said respective at least one previous vehicle mass $m_i$;
- calculation of a total estimation error $x_i$, corresponding to a summation of said at least one determined vehicle acceleration $\tilde{a}_i$ in relation to an actual vehicle acceleration $a$ for said vehicle (100);
- selection of a previous vehicle mass $m_{i\_guess}$, which has the smallest total estimation error $x_{i\_guess}$ for the corresponding said estimated vehicle acceleration $\tilde{a}_i$, following which said selected previous vehicle mass $m_{i\_guess}$ is compared to a previously estimated vehicle mass $m_{est\_old}$, on order to determine whether said change of said actual mass m for said vehicle (100) has occurred.

6. Method (200) according to any of claims 1-4, wherein said method comprises:

- calculation of at least one respective value for a correlation $\rho(C_{rr}; a + gsin(\alpha))$ for said at least one variable, corresponding to said previous vehicle mass $m_i$, which consists of at least one respective rolling resistance coefficient $C_{rr\_i}$, and a variable $a + gsin(\alpha)$ related to a road gradient $\alpha$ experienced by said vehicle (100); and
- selection of a previous vehicle mass $m_{i\_guess}$, which has the smallest absolute value $min|\rho(C_{rr}; a + gsin(\alpha))|$ for said value for said correlation, following which said selected previous vehicle mass $m_{i\_guess}$ is compared to a previously estimated vehicle mass $m_{est\_old}$, on order to determine whether said change of said actual mass $m$ for said vehicle (100) has occurred.

7. Method (200) according to any of claims 4-6, wherein said change of said actual mass $m$ is determined to have occurred, if said selected previous vehicle mass $m_{i\_guess}$ differs from said previously estimated vehicle mass $m_{est\_old}$.

8. Method (200) according to any of claims 4-7, further comprising:

- determination of an updated estimated value $m_{est\_new}$ for said actual mass $m$, wherein said actual updated estimated value $m_{est\_new}$ is determined to be equal to said selected previous vehicle mass $m_{i\_guess}$; $m_{est\_new} = m_{i\_guess}$.

9. Method (200) according to any of claims 4-8, wherein said selection of a previous vehicle mass $m_{i\_guess}$ is carried out before a gear shift in a gearbox (103) in said vehicle (100) is carried out, and after said vehicle has been set into motion.

10. Method (200) according to claim 5, wherein said selection of a previous vehicle mass $m_{i\_guess}$ is carried out, when said total estimation error $x_i$ for said at least one determined vehicle acceleration $\tilde{a}_i$ in relation to an actual vehicle acceleration $a$ for said vehicle (100) is smaller than a threshold value $x_{i\_th}$; $x_i < x_{i\_th}$.

**11.** Method (200) according to claim 6, wherein said selection of a previous vehicle mass $m_{i\_guess}$ is carried out after a predetermined number of gear shifts in a gearbox in said vehicle (100) has occurred in the time period since said vehicle (100) was most recently stationary.

**12.** Method (200) according to any of claims 4-11, wherein said previously estimated vehicle mass $m_{est\_old}$ has a value, which has been estimated for the vehicle's actual mass $m$ before said method for the determination of whether a change of an actual mass $m$ for a vehicle (100) has occurred is implemented.

**13.** Method (200) according to any of claims 1-12, wherein said mass history $m_1, m_2, ... m_l$ for said vehicle (100) comprises said at least one previous vehicle mass $m_i$, which the vehicle had before said method for the determination of whether a change of an actual mass $m$ for a vehicle (100) has occurred is implemented.

**14.** Method (200) according to claim 13, wherein said mass history $m_1, m_2, ... m_l$ comprises at least two sets of at least one previous vehicle mass $m_i$, wherein each one of the at least two sets are related to different load capacities for said vehicle (100).

**15.** Method (200) according to any of claims 1-14, wherein said determination of whether a change of said actual mass m for said vehicle (100) has occurred is used at the automatic gear selection in said vehicle (100).

**16.** Computer program comprising a program code which, when said program code is executed in a computer, achieves that said computer implements the method according to any of claims 1-15.

**17.** Computer program product comprising a computer readable medium and a computer program according to claim 16, wherein said computer program is comprised in said computer readable medium.

**18.** System for determination of whether a change of an actual mass $m$ for a vehicle (100) has occurred;
**characterised by**

- a first determination device (131), arranged for the determination (201) of at least one variable, related to a rolling resistance $F_{rr}$ for said vehicle (100), wherein each one of said at least one magnitude corresponds to a previous vehicle mass $m_i$, which is comprised in a mass history $m_1, m_2, ... m_l$ for said vehicle (100) and wherein said first determination device (131) is arranged to carry out said determination of said at least one magnitude after said vehicle has been set into motion;
- a second determination device (132), arranged for determination (202) of whether a change of said actual mass $m$ for said vehicle (100) has occurred, wherein said second determination device (132) is arranged to base said determination of whether said change has occurred on said at least one determined variable related to a rolling resistance $F_{rr}$ for said vehicle (100), and on said mass history $m_1, m_2, ... m_l$ for said vehicle (100);
- a utilisation device (133), arranged for the use (203) of said determination of whether said change of said actual mass $m$ has occurred.

FIG. 1

200

[201]
Determination of at least
one variable related to a
rolling resistance for the vehicle,
corresponding to mass in a
mass history

[202]
Determination as to whether
a change of the actual
mass for the vehicle has occurred,
based on the variable
related to rolling resistance
and on mass history

[203]
Use of determination
of whether the change has occurred

Fig. 2

FIG. 3

400

```
┌─────────────────────────────────┐
│            [410]                │
│        Use the at least one     │
│      previous vehicle mass as a │
│        selectable vehicle mass  │
│                                 │
└─────────────────────────────────┘
                 │
                 ▼
┌─────────────────────────────────┐
│            [420]                │
│      Select a previous vehicle  │
│      mass from mass history     │
│                                 │
└─────────────────────────────────┘
                 │
                 ▼
┌─────────────────────────────────┐
│            [430]                │
│      Compare the selected prior │
│     vehicle mass with a previously │
│    estimated vehicle mass, ➔    │
│        determine change or      │
│        not of vehicle mass      │
│                                 │
└─────────────────────────────────┘
```

Fig. 4

520a

┌─────────────────────────────────────────┐
│              [521a]                      │
│     Estimate the vehicle's acceleration  │
│     corresponding to the at least one    │
│         previous vehicle mass            │
└─────────────────────────────────────────┘
                    │
                    ▼
┌─────────────────────────────────────────┐
│              [522a]                      │
│      Calculate total estimation error    │
└─────────────────────────────────────────┘
                    │
                    ▼
┌─────────────────────────────────────────┐
│              [523a]                      │
│          Select the previous             │
│     vehicle mass with the smallest       │
│        total estimation error            │
└─────────────────────────────────────────┘

## Fig. 5a

520b

┌─────────────────────────────────────────┐
│              [521b]                      │
│      Calculate correlation between       │
│       rolling resistance coefficient     │
│          and a variable related to       │
│            the road gradient             │
└─────────────────────────────────────────┘
                    │
                    ▼
┌─────────────────────────────────────────┐
│              [522b]                      │
│          Select the previous             │
│     vehicle mass with the smallest       │
│         absolute value for               │
│            the correlation               │
└─────────────────────────────────────────┘

## Fig. 5b

Fig. 6

Fig. 7a

Fig. 7b

Europäisches
Patentamt

European
Patent Office

Office européen
des brevets

## EUROPEAN SEARCH REPORT

Application Number

EP 15 16 3625

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 102 35 969 A1 (ZAHNRADFABRIK FRIEDRICHSHAFEN [DE]) 19 February 2004 (2004-02-19) * paragraph [0002] - paragraph [0009] * * paragraph [0013] - paragraph [0036] * * figures 1-3 * | 1-18 | INV. G01G19/08 ADD. G01G23/00 |

TECHNICAL FIELDS
SEARCHED      (IPC)

G01G

The present search report has been drawn up for all claims

| Place of search | Date of completion of the search | Examiner |
|---|---|---|
| The Hague | 5 August 2015 | Koch, Florian |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

&: member of the same patent family, corresponding
     document

EPO FORM 1503 03.82 (P04C01)

**ANNEX TO THE EUROPEAN SEARCH REPORT
ON EUROPEAN PATENT APPLICATION NO.**  EP 15 16 3625

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2015

| Patent document cited in search report | Publication date | Patent family member(s) | Publication date |
|---|---|---|---|
| DE 10235969 A1 | 19-02-2004 | NONE | |

EPO FORM P0459

For more details about this annex : see Official Journal of the European Patent Office, No. 12/82